# EUROPEAN PATENT SPECIFICATION

(11) **EP 4 026 723 B1**
(45) Date of publication and mention of the grant of the patent: **04.09.2024**
(21) Application number: 21213579.2
(22) Date of filing: 10.12.2021
(51) Int. Cl.: B60K 1/00, B60K 11/06, B60K 15/07, B60K 1/04, H01M 8/24, B60L 50/71, B60L 50/72, B60L 3/00, H01M 8/04007, B60K 15/03, B60K 15/063, H01M 8/04082

(54) **FUEL CELL VEHICLE**
BRENNSTOFFZELLENFAHRZEUG
VÉHICULE À PILE À COMBUSTIBLE

(30) Priority: 08.01.2021 JP 2021002089
(43) Date of publication of application: 13.07.2022
(73) Proprietor: Suzuki Motor Corporation, Hamamatsu-shi, Shizuoka 432-8611 (JP)
(72) Inventor: KAWANO, Shinya, Hamamatsu-shi 432-8611 (JP); MIZUTANI, Kazuhiko, Hamamatsu-shi 432-8611 (JP); OTA, Toru, Hamamatsu-shi 432-8611 (JP)
(74) Representative: Haseltine Lake Kempner LLP

(56) References cited:
- CN-A- 109 760 526
- CN-A- 112 026 545
- CN-U- 210 149 159
- DE-A1- 102014 218 468

## Description

### Technical Field

The present invention relates to a fuel cell vehicle including a fuel cell unit capable of generating electric power, a fuel tank capable of storing fuel used to generate the electric power in the fuel cell unit, and a motor capable of driving using the electric power generated by the fuel cell unit.

### Background Art

Development has been advanced for practical use of a fuel cell vehicle. The fuel cell vehicle includes a fuel cell unit capable of generating electric power, a fuel tank capable of storing fuel used to generate the electric power in the fuel cell unit, and a motor capable of driving using the electric power generated by the fuel cell unit, and is configured to be able to run with the driving of the motor. In such a fuel cell vehicle, performance of the fuel cell unit is reduced at high temperatures. Therefore, various cooling techniques are used for the fuel cell vehicle to cool the fuel cell unit efficiently.

An example of the fuel cell vehicle adopting the cooling technique includes a fuel cell mounted electric vehicle (for example, see Patent Literature 1) including a driver seat disposed at a rear of the vehicle, a vehicle body cover disposed below the driver seat at the rear of the vehicle and forming a power compartment therein, a footrest floor disposed in front of the driver seat and the vehicle body cover at a front of the vehicle and formed on a low floor, a fuel cell system disposed in front of the power compartment, a heat exchange unit used to cool the fuel cell system, and a fuel tank disposed at the front of the vehicle, the fuel cell system including a cell stack used for power generation, the heat exchange unit including an heat exchanger, a cooling fan, a cooling air duct extending to connect the heat exchanger and the cooling fan, an intake port that takes cooling air into the power compartment, and a discharge port that discharges the cooling air from the power compartment, the cell stack being disposed at a front lower portion of the power compartment, the heat exchange unit being disposed at a front upper portion of the power compartment, one of the intake port and the discharge port being formed on a front wall of the vehicle body cover and disposed to correspond to one of the heat exchanger and the cooling fan, the other of the intake port and the discharge port being formed on a lateral wall of the vehicle body cover and disposed to correspond to the other of the heat exchanger and the cooling fan.

### Citation List

### Patent Literature

Patent Literature 1 JP 2009-087859 A. CN 210 149 159 U relates to an agricultural tractor. CN 112 026 545 A relates to a hydrogen fuel containing integrated system. CN 109 760 526 A relates to an integrated fuel cell power generation system and electric vehicle.

### Summary of Invention

### Problems to be Solved by the Invention

However, in the example of the fuel cell vehicle, since the fuel tank is disposed at the front of the vehicle, it is difficult to protect the fuel tank from an external force at the time of a collision of the vehicle. In the example of the fuel cell vehicle, since the cooling air merely passes through the front upper portion of the power compartment, cooling air is not efficiently utilized. As a result, there is room to improve cooling efficiency of the fuel cell unit in the fuel cell vehicle.

In the fuel cell vehicle, it is preferable to efficiently protect the fuel tank and improve cooling efficiency of the fuel cell unit in view of such circumstances.

### Means for Solving the Problems

To solve the problems, a fuel cell vehicle according to an aspect includes: an operating part including a front wheel located closer to a front side of the vehicle and an operating device used for running operation; a riding part configured to be able to allow a passenger to ride in and located closer to a rear side of the vehicle from the operating part; a drive part including a rear wheel located closer to the rear side of the vehicle from the front wheel and a motor configured to be able to drive the rear wheel, and located closer to the rear side of the vehicle from the riding part; a fuel cell unit configured to be able to generate electric power used to drive the motor; and a fuel tank configured to be able to store fuel used for generation of the electric power in the fuel cell unit, the fuel tank including a container for storing the fuel and a Shut-off valve attached to a neck of the container and configured to be able to open and close a flow of the fuel between an inside and an outside of the container, wherein the fuel cell vehicle includes a compartment for mounting the fuel cell unit and the fuel tank, the compartment includes a tank compartment located between the riding part and the drive part in a vehicle front-rear direction and an air inlet duct configured to be able to allow air to flow into the compartment, the fuel tank is disposed such that the Shut-off valve is directed to one side in a vehicle width direction in the tank compartment, the air inlet duct is located closer to one side in the vehicle width direction from the Shut-off valve and is overlapped on the Shut-off valve as viewed in the vehicle width direction, and the compartment includes a venting port formed to vent the air inlet duct with the tank compartment.

### Advantageous Effect of Invention

In the fuel cell vehicle according to the aspect, it is possible to efficiently protect the fuel tank and to improve cooling efficiency of the fuel cell unit.

### Brief Description of Drawings

Figure 1 is a left side view schematically showing a fuel cell vehicle according to an embodiment.
Figure 2 is a right side view schematically showing the fuel cell vehicle according to the embodiment.
Figure 3 is a rear view schematically showing the fuel cell vehicle according to the embodiment.
Figure 4 is a cross-sectional view schematically showing the fuel cell vehicle according to the embodiment in a state of being taken along a line W-W in Figure 1.
Figure 5 is a cross-sectional view schematically showing the fuel cell vehicle according to the embodiment in a state of being taken along a line X-X in Figure 1.
Figure 6 is a cross-sectional view schematically showing the fuel cell vehicle according to the embodiment in a state of being taken along a line Y-Y in Figure 3.
Figure 7 is a cross-sectional view schematically showing the fuel cell vehicle according to the embodiment in a state of being taken along a line Z-Z in Figure 3.

### Mode for Carrying Out the Invention

A fuel cell vehicle according to an embodiment will be described below. The fuel cell vehicle according to the present embodiment is a fuel cell type vehicle for a single-seater type. In particular, the fuel cell vehicle may be a fuel cell type mobility vehicle for a single-seater type.

However, the fuel cell vehicle is not limited to the above-described vehicle. For example, the fuel cell vehicle may be a fuel cell type vehicle for a double-seater type. In particular, the fuel cell vehicle may be a fuel cell type mobility vehicle for a double-seater type. In this case, two passengers preferably ride in the fuel cell vehicle side by side in a vehicle width direction.

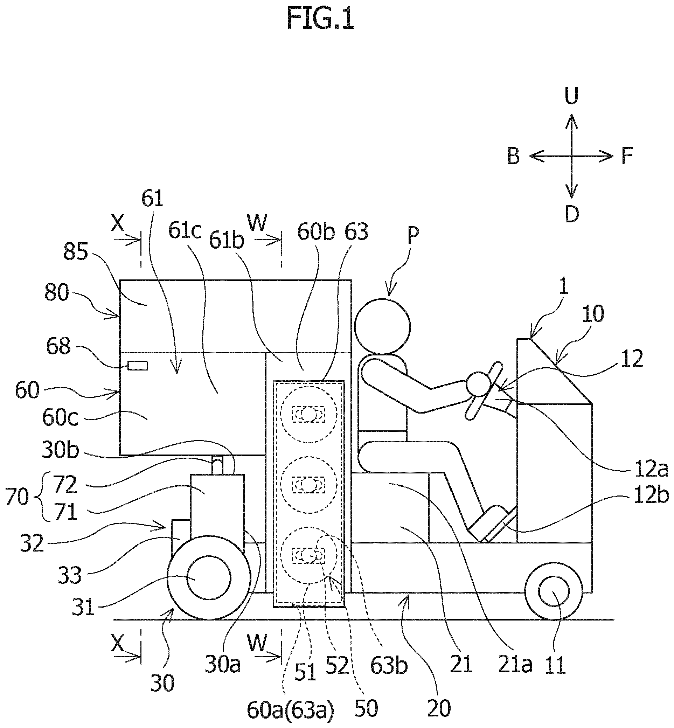

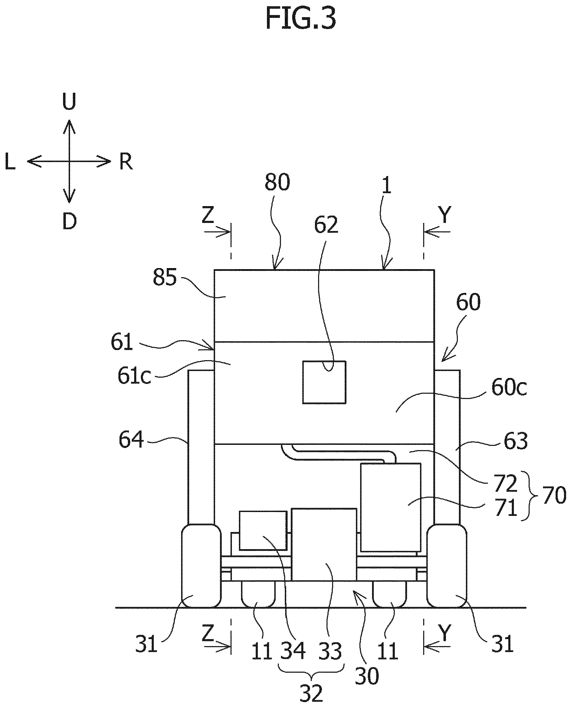

In Figures 1 to 7 used for the description, directions based on the fuel cell vehicle (hereinafter, simply referred to as a "vehicle" as necessary) are indicated as follows. In Figures 1, 2, 6, and 7, a front side and a rear side of the vehicle are indicated by a one-headed arrow F and a one-headed arrow B, respectively. In Figures 3 to 5, a left side and a right side when viewed in the front side direction of the vehicle are indicated by a one-headed arrow L and a one-headed arrow R, respectively. A vehicle width direction is indicated by a one-headed arrow L and a one-headed arrow R. Furthermore, in Figures 1 to 7, an upper side and a lower side of the vehicle are indicated by a one-headed arrow U and a one-headed arrow D, respectively. In the following description, directions simply referred to as "front side", "rear side", "left side", "right side", "upper side", "lower side", "front-rear direction", "width direction", and "up-down direction" indicate directions based on the vehicle.

### Outline of Fuel Cell Vehicle

An outline of the fuel cell vehicle according to the present embodiment will be described with reference to Figures 1 to 7. In other words, the fuel cell vehicle according to the present embodiment is schematically configured as follows. As shown in Figures 1 to 7, a fuel cell vehicle includes a vehicle body 1.

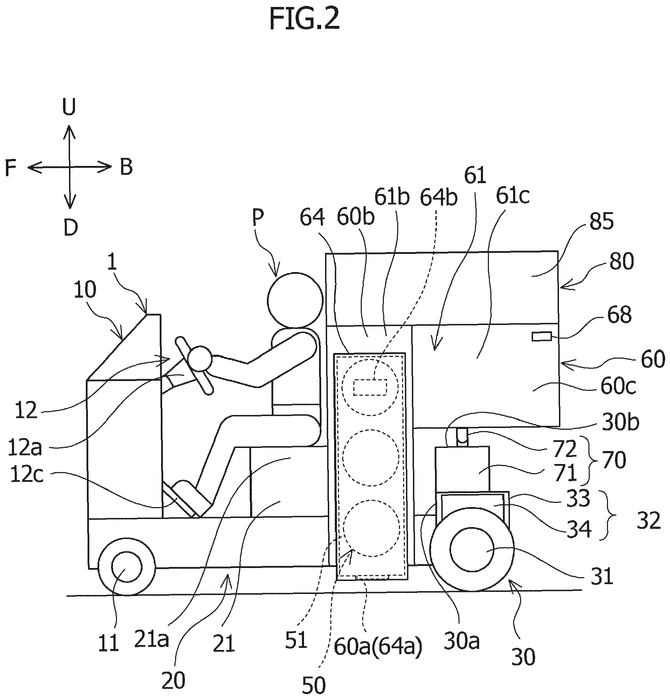

Referring to Figures 1 and 2, the fuel cell vehicle includes an operating part 10 including a front wheel 11 closer to the front side and an operating device 12 used for a running operation. The fuel cell vehicle includes a riding part 20 configured to enable a passenger P to ride. The riding part 20 is located closer to the rear side from the operating part 10.

Referring to Figures 1 to 3, the fuel cell vehicle includes a drive part 30 located closer to the rear side from the riding part 20. The drive part 30 includes a rear wheel 31 located closer to the rear side from the front wheel 11. The drive part 30 includes a drive device 32 used for driving the vehicle to run. The drive device 32 includes a motor 33 configured to drive and move the rear wheel 31. The motor 33 may have or may not have a transmission.

Referring to Figures 1 to 7, the fuel cell vehicle includes a fuel cell unit 40 configured to be capable of generating electric power used to drive the motor 33. The fuel cell vehicle includes a fuel tank 50 configured to be capable of storing fuel used to generate electric power in the fuel cell unit 40.

Referring to Figures 1, 2, 4, 6, and 7, the fuel cell vehicle includes a plurality of fuel tanks 50. In these drawings, as an example, a fuel cell vehicle including three fuel tanks 50 is shown. However, the fuel cell vehicle may include one fuel tank, two fuel tanks, or four or more fuel tanks.

The fuel tank 50 includes a container 51 configured to store the fuel. The fuel tank 50 also includes a Shut-off valve 52 attached to a neck of the container 51. The Shut-off valve 52 is configured to be able to open and close a flow of fuel between the inside and the outside of the container 51.

Referring to Figures 1 to 7, the fuel cell vehicle includes a compartment 60 that mounts the fuel cell unit 40 and the fuel tank 50. As shown in Figures 1, 2, 6, and 7, the compartment 60 includes a tank compartment 60b located between the riding part 20 and the drive part 30 in a front-rear direction. Referring to Figures 1 to 5, the compartment 60 includes a first air inlet duct 63 configured to allow air to flow thereinto.

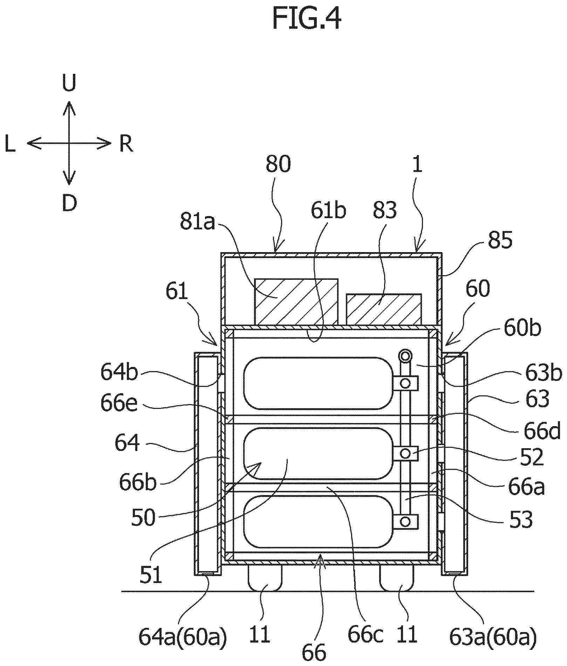

Referring to Figures 1, 2, 4, 6, and 7, the plurality of fuel tanks 50 are disposed such that the Shut-off valve 52 is directed to one side in a width direction in the tank compartment 60b of the compartment 60. Referring to Figures 1 and 4, the first air inlet duct 63 is located closer to one side in the width direction from the Shut-off valves 52 of the plurality of fuel tanks 50. The first air inlet duct 63 is overlapped on these Shut-off valves 52 as viewed in the width direction.

The compartment 60 includes a plurality of venting ports 63b through which the first air inlet duct 63 and the tank compartment 60b vent (communicate) with each other. However, the compartment may include one venting port formed to vent the first air inlet duct with the tank compartment. In this case, one venting port may be disposed to correspond to the fuel tank located at the lowermost side among the plurality of fuel tanks.

Furthermore, the fuel cell vehicle according to the present embodiment can be schematically configured as follows. In particular, referring to Figures 1 and 4, the plurality of fuel tanks 50 are aligned in an up-down direction. The first air inlet duct 63 extends from a lower side toward an upper side along the Shut-off valves 52 of the plurality of fuel tanks 50 aligned in the up-down direction.

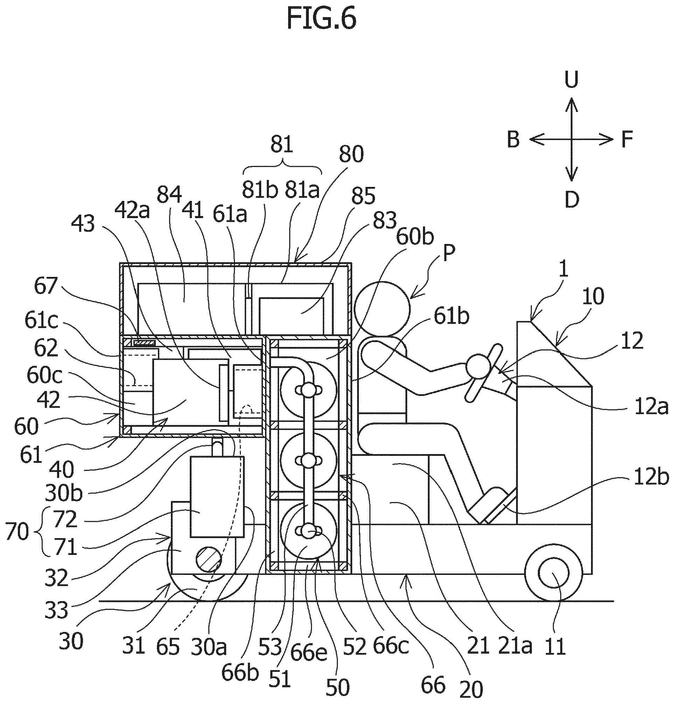

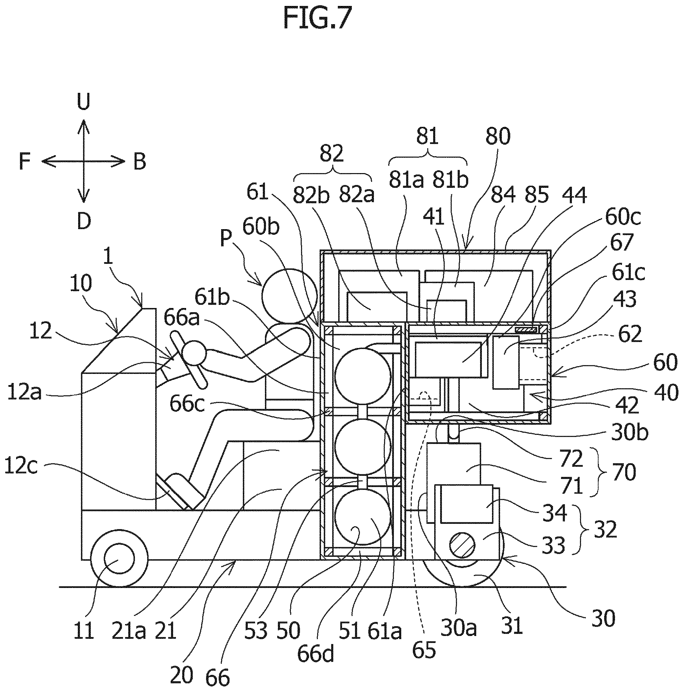

In particular, as shown in Figures 6 and 7, the compartment 60 includes a fuel cell compartment 60c located closer to the rear side from the tank compartment 60b. The fuel cell compartment 60c is located above the drive part 30. The fuel cell compartment 60c mounts the fuel cell unit 40.

Referring to Figures 3 and 5 to 7, the compartment 60 includes an exhaust port 62 configured to be able to discharge gas existing therein to the outside of the compartment 60. The exhaust port 62 is disposed at a rear end of the compartment 60 located closer to the rear side from the drive part 30.

Referring to Figures 1 and 4, one of the plurality of venting ports 63b is disposed to correspond to the fuel tank 50 located at the lowermost side among the plurality of fuel tanks 50. The plurality of venting ports 63b are disposed to face the Shut-off valves 52 of the plurality of fuel tanks 50, respectively.

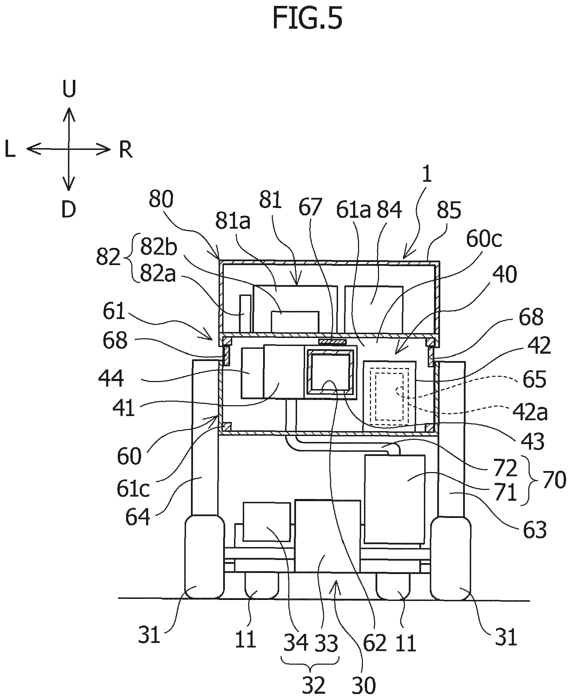

Referring to Figures 5 to 7, the fuel cell unit 40 includes a fuel cell stack 41 configured to be capable of generating electric power used to drive the motor 33. The fuel cell unit 40 includes a compressor 42 configured to be able to send compressed air to the fuel cell stack 41. The air sent from the compressor 42 to the fuel cell stack 41 is used for electric power generation of the fuel cell stack 41. The compressor 42 includes an air intake port 42a configured to draw air thereinto.

As shown in Figure 6, the compartment 60 includes a connection port 65 that opens to connect the tank compartment 60b and the fuel cell compartment 60c to each other. The air intake port 42a of the compressor 42 is directed forward to face the connection port 65. An upper end of the connection port 65 is located above a lower end of the air intake port 42a.

Referring to Figures 4, 6, and 7, the compartment 60 includes a frame assembly 66 including a first longitudinal frame 66a and a second longitudinal frame 66b spaced apart from each other in the width direction and a plurality of first lateral frames 66c disposed in the width direction. The plurality of first lateral frames 66c are spaced apart from each other in the up-down direction. The plurality of first lateral frames 66c extend to connect the first and second longitudinal frames 66a and 66b.

The plurality of fuel tanks 50 are disposed inside the frame assembly 66. The first longitudinal frame 66a is located on the side to which the Shut-off valve 52 is directed in the width direction. The first longitudinal frame 66a is located between the Shut-off valve 52 of the fuel tank 50 and the first air inlet duct 63 as viewed in the front-rear direction.

### Details of Fuel Cell Vehicle

Referring to Figures 1 to 7, the fuel cell vehicle according to the present embodiment can be configured as follows in detail. The compartment 60 is defined by a housing 61. Referring to Figures 1 to 3 and 5 to 7, the fuel cell vehicle includes a drain tank 71 configured to be capable of storing water produced in the fuel cell stack 41. The fuel cell vehicle also includes a drain pipe 72 extending between the fuel cell stack 41 and the drain tank 71 such that the water produced in the fuel cell stack 41 is sent to the drain tank 71. The drive part 30 includes the drain tank 71.

The fuel cell vehicle includes a drain mechanism 70 configured to drain the water produced in the fuel cell stack 41 of the fuel cell unit 40. The drain mechanism 70 includes the drain tank 71 and the drain pipe 72.

Referring to Figures 4 to 7, the fuel cell vehicle includes a secondary cell unit 81 configured to be able to be charged with the electric power generated by the fuel cell unit 40 and to supply the electric power to the motor 33. The fuel cell vehicle includes an electric power adjusting unit 82 configured to be able to adjust the electric power to be supplied from the secondary cell unit 81 to the motor 33.

Referring to Figures 1 to 7, the fuel cell vehicle includes an electric power control part 80 located outside the compartment 60 and above the compartment 60. The secondary cell unit 81 and the electric power adjusting unit 82 are placed on the housing 61 of the compartment 60 in the electric power control part 80.

The operating part 10 includes two front wheels 11 spaced apart from each other in the width direction. In particular, referring to Figures 1 and 2, the operating device 12 includes a steering unit 12a configured to be able to steer at least two front wheels 11. The steering unit 12a is configured to be steerable by a hand of the passenger P on the riding part 20.

For example, the steering unit 12a may be a steering wheel. However, the steering unit is not limited to a steering wheel. For example, the steering unit may be a steering wheel having two grips spaced apart from each other in the vehicle width direction.

In particular, referring to Figure 1, the operating device 12 includes an accelerator 12b used to adjust a running speed of the vehicle. The accelerator 12b is configured to be operable by a foot of the passenger P on the riding part 20. In particular, referring to Figure 2, the operating device 12 includes a brake 12c used for braking the vehicle. The brake 12c is also configured to be operable by the foot of the passenger P on the riding part 20.

In particular, referring to Figures 1 and 2, the riding part 20 includes a seat 21 configured such that the passenger P can be seated. The seat 21 includes a seat cushion 21a that supports buttocks of the passenger P. A space is formed between the operating part 10 and the seat 21 of the riding part 20. A height of the seat cushion 21a is set such that the operating device 12 can be operated in a state in which the passenger P is seated on the seat cushion 21a. The seat 21 is adjacent to the housing 61 of the compartment 60 in the vehicle front-rear direction.

### Details of Drive Part

Referring to Figures 1 to 3 and 5 to 7, the drive part 30 can be configured in detail as follows. As shown in Figures 1, 2, 6, and 7, the drive part 30 includes a front edge region 30a located closer to the front side and an upper edge region 30b located closer to the upper side. The compartment 60 is disposed outside the drive part 30 along the front edge and upper edge regions 30a and 30b of the drive part 30.

The front edge region 30a of the drive part 30 is defined along a front edge of the drive part 30 located at the frontmost side in the drive part 30 as viewed in the width direction. The upper edge region 30b of the drive part 30 is defined along the upper edge of the drive part 30 located at the uppermost side in the drive part 30 as viewed in the width direction.

Referring to Figures 1 to 3 and 5 to 7, the drive device 32 of the drive part 30 includes a motor control device 34 configured to be able to control the motor 33. The drive part 30 includes two rear wheels 31 spaced apart from each other in the width direction. The motor 33 is connected to the two rear wheels 31 to be able to drive the two rear wheels 31. The motor 33, the motor control device 34, and the drain tank 71 are disposed between the two rear wheels 31 in the width direction.

### Details of Fuel Cell Unit

Referring to Figures 5 to 7, the fuel cell unit 40 can be configured in detail as follows. In the fuel cell unit 40, the fuel cell stack 41 generates electric power using fuel supplied from the fuel tank 50.

The fuel cell unit 40 includes the compressor 42 configured to be able to send compressed air to the fuel cell stack 41. The air sent from the compressor 42 to the fuel cell stack 41 is used for generation of electric power in the fuel cell stack 41. The compressor 42 includes the air intake port 42a configured to take air thereinto. The air intake port 42a is opened forward such that air can be taken into the compressor 42 from the front side to the rear side. The compressor 42 is located on one side of the fuel cell stack 41 in the width direction.

The fuel cell unit 40 includes an exhaust fan 43 configured to send the gas discharged from the fuel cell stack 41 from the fuel cell stack 41 toward the exhaust port 62 in order to discharge the gas to the outside of the compartment 60. The exhaust fan 43 is located on the other side of the compressor 42 in the width direction. The exhaust fan 43 is located rearward of the fuel cell stack 41.

The fuel cell unit 40 includes a power supply circuit 44 configured to be able to draw the electric power generated by the fuel cell stack 41. The power supply circuit 44 is located on the other side of the exhaust fan 43 in the width direction. The electric power drawn by the power supply circuit 44 is supplied to the motor 33 to operate the motor 33 or an auxiliary machine, or is sent to a drive cell 81a or an auxiliary cell 81b to charge the drive cell 81a or the auxiliary cell 81b of the secondary cell unit 81.

Here, the auxiliary machine may be an electric device other than the motor 33. Examples of the auxiliary machines may include electrical machines, for example, the motor control device 34, the compressor 42, the exhaust fan 43, a ventilation hole 68 to be described below, a secondary cell control device 83, a multi-control device 84, and other in-vehicle electrical components.

### Details of Fuel Tank

Referring to Figures 1, 2, 4, 6, and 7, the fuel tank 50 can be configured in detail as follows. The fuel tank 50 may be a portable high-pressure container. In the plurality of fuel tanks 50, the amount of opening and closing of the Shut-off valve 52 can be adjusted.

The Shut-off valves 52 of the plurality of fuel tanks 50 face the same side in the width direction. The compressor 42 described above is located on a side of the fuel cell stack 41 to which the Shut-off valve 52 is directed in the width direction. The Shut-off valves 52 of the plurality of fuel tanks 50 are aligned in the up-down direction. The Shut-off valves 52 of the plurality of fuel tanks 50 are aligned on a vertical line.

As shown in Figures 4 and 6, the fuel cell vehicle includes a fuel supply pipe 53 extending such that the fuel flowing out of the Shut-off valves 52 of the plurality of fuel tanks 50 can be sent toward the fuel cell stack 41. The fuel supply pipe 53 is connected to the Shut-off valves 52 of the plurality of fuel tanks 50 and the fuel cell stack 41. A flow rate of the fuel passing through the fuel supply pipe 53 can be adjusted.

### Details of Compartment

Referring to Figures 1 to 7, the compartment 60 can be configured in detail as follows. Referring to Figures 1, 2, and 4, the compartment 60 includes an air inlet port 60a configured to be able to allow air to flow thereinto. The air inlet port 60a is disposed at a lower end of the compartment 60. The air inlet port 60a is disposed at a lower end of the tank compartment 60b of the compartment 60.

Referring to Figures 1, 2, 4, 6, and 7, the tank compartment 60b of the compartment 60 is disposed along the front edge region 30a of the drive part 30. The tank compartment 60b of the compartment 60 is located closer to the front side from the drive device 32. The tank compartment 60b mounts the fuel tank 50.

Referring to Figures 1 to 3 and 5 to 7, the fuel cell compartment 60c of the compartment 60 is disposed along the upper edge region 30b of the drive part 30 from the upper end of the tank compartment 60b to the rear side. The fuel cell compartment 60c is located closer to the upper side from the drive device 32. The tank compartment 60b and the fuel cell compartment 60c are adjacent to each other in the front-rear direction.

Referring to Figures 1 to 7, the housing 61 of the compartment 60 includes an intermediate housing part 61a that partitions the tank compartment 60b and the fuel cell compartment 60c from each other. The housing 61 includes a tank-side housing part 61b that defines the tank compartment 60b together with the intermediate housing part 61a. The housing 61 includes a fuel cell-side housing part 61c that defines the fuel cell compartment 60c together with the intermediate housing part 61a.

Referring to Figures 1 to 5, the compartment 60 includes a second air inlet duct 64 in addition to the first air inlet duct 63. The second air inlet duct 64 is also configured to be able to allow air to flow into the compartment 60. The first and second air inlet ducts 63 and 64 are spaced apart from each other in the width direction.

The first and second air inlet ducts 63 and 64 are located on both sides of the tank compartment 60b of the compartment 60 in the width direction, and are adjacent to the tank compartment 60b in the width direction. The compartment 60 includes at least one venting port 63b and 64b formed to vent (communicate) each of the first and second air inlet ducts 63 and 64 with the tank compartment 60b. Each of the first and second air inlet ducts 63 and 64 extends from the lower side to the upper side. Each of the first and second air inlet ducts 63 and 64 can extend in the vertical direction.

The number of the plurality of venting ports 63b formed to vent the tank compartment 60b with the first air inlet duct 63 corresponds to the number of the plurality of fuel tanks 50. The first air inlet duct 63 includes an air inlet port 63a configured to be able to allow air to flow thereinto. The air inlet port 63a is disposed at a lower end of the first air inlet duct 63. The air inlet port 63a corresponds to the air inlet port 60a of the compartment 60 described above. The air inlet port 63a is opened downward. However, the air inlet port can also be opened forward, rearward, or outward in the width direction.

Referring to Figures 2 and 4, the second air inlet duct 64 is located closer to the other side in the width direction from the plurality of fuel tanks 50. The second air inlet duct 64 extends from the lower side to the upper side along the plurality of fuel tanks 50 aligned in the up-down direction. The second air inlet duct 64 can be formed substantially symmetrically with the first air inlet duct 63 in the width direction.

The second air inlet duct 64 includes an air inlet port 64a configured to be able to allow air to flow thereinto. The air inlet port 64a is disposed at a lower end of the second air inlet duct 64. The air inlet port 64a also corresponds to the air inlet port 60a of the compartment 60 described above. The air inlet port 64a is opened downward. However, the air inlet port can also be opened forward, rearward, or outward in the width direction.

The compartment 60 includes one venting port 64b formed to vent the second air inlet duct 64 with the tank compartment 60b. However, the compartment may include a plurality of venting ports formed to vent the second air inlet duct with the tank compartment. In this case, each of the plurality of venting ports may be disposed to face each of the plurality of fuel tanks.

One venting port 64b is disposed to correspond to the fuel tank 50 located on the uppermost side among the plurality of fuel tanks 50. However, one venting port may be disposed to correspond to the fuel tank other than the fuel tank located on the uppermost side among the plurality of fuel tanks. For example, one venting port may be disposed to correspond to the fuel tank located on the lowermost side among the plurality of fuel tanks.

As shown in Figure 6, the compartment 60 includes the connection port 65 that is opened to connect the tank compartment 60b and the fuel cell compartment 60c. The connection port 65 is directed rearward to face the air intake port 42a of the compressor 42 of the fuel cell unit 40. An upper end of the connection port 65 is located above the lower end of the air intake port 42a.

The connection port 65 is formed to penetrate the intermediate housing part 61a. A peripheral edge of the connection port 65 can be formed to protrude toward the air intake port 42a from the intermediate housing part 61a. The connection port 65 is disposed to be overlapped on the air intake port 42a as viewed in the front-rear direction. The connection port 65 can be disposed to be overlapped on the air intake port 42a as viewed in the front-rear direction as a whole.

Referring to Figures 3, 5, and 7, the exhaust port 62 is formed to penetrate a rear end of the fuel cell-side housing part 61c in the front-rear direction. The exhaust port 62 is disposed behind the exhaust fan 43 of the fuel cell unit 40. The exhaust port 62 faces the exhaust fan 43 in the front-rear direction.

A peripheral edge of the exhaust port 62 can be formed to protrude toward the exhaust fan 43 from the rear end of the fuel cell-side housing part 61c. The exhaust port 62 is disposed to be overlapped on the exhaust fan 43 as viewed in the front-rear direction. The exhaust port 62 can be disposed to be overlapped on the exhaust fan 43 as viewed in the front-rear direction as a whole.

Referring to Figures 4, 6, and 7, the frame assembly 66 of the compartment 60 is disposed to surround the plurality of fuel tanks 50. The frame assembly 66 includes a plurality of longitudinal frames 66a and 66b disposed in the up-down direction. Each of the longitudinal frames 66a and 66b is formed in an elongated shape. The frame assembly 66 includes a plurality of lateral frames 66c, 66d, and 66e disposed in a horizontal direction. Each of the lateral frames 66c, 66d, and 66e is formed in an elongated shape.

The frame assembly 66 is disposed in the tank compartment 60b. The intermediate housing part 61a and the tank-side housing part 61b of the housing 61 are supported by the frame assembly 66. The intermediate housing part 61a and the tank-side housing part 61b of the housing 61 are also attached to the frame assembly 66.

As described above, the plurality of longitudinal frames 66a and 66b include at least one first longitudinal frame 66a located at one end in the width direction of the frame assembly 66. The frame assembly 66 may include two first longitudinal frames 66a spaced apart from each other in the front-rear direction.

As described above, the plurality of longitudinal frames 66a and 66b include at least one second longitudinal frame 66b located at the other end in the width direction of the frame assembly 66. The second longitudinal frame 66b is located between the container 51 of the fuel tank 50 and the second air inlet duct 64 as viewed in the front-rear direction. The frame assembly 66 may include two second longitudinal frames 66b spaced apart from each other in the front-rear direction.

As described above, the plurality of lateral frames 66c, 66d, and 66e include a plurality of first lateral frames 66c connecting the first and second longitudinal frames 66a and 66b facing each other in the width direction. Each of the first lateral frames 66c is disposed in the width direction. The plurality of first lateral frames 66c are spaced apart from each other in the up-down direction.

The plurality of lateral frames 66c, 66d, and 66e include a plurality of second lateral frames 66d connecting the two first longitudinal frames 66a. Each of the second lateral frames 66d is disposed in the front-rear direction. The plurality of lateral frames 66c, 66d, and 66e include a plurality of third lateral frames 66e connecting the two second longitudinal frames 66b. Each of the third lateral frames 66e is disposed in the front-rear direction.

Referring to Figures 1, 2, 4, 6, and 7, the first air inlet duct 63 is supported by the first longitudinal frame 66a. However, the first air inlet duct 63 may also be supported by the second lateral frame 66d instead of the first longitudinal frame 66a or in addition to the first longitudinal frame 66a. The second air inlet duct 64 is supported by the second longitudinal frame 66b. However, the second air inlet duct 64 may also be supported by the third lateral frame 66e instead of the second longitudinal frame 66b or in addition to the second longitudinal frame 66b.

Referring to Figures 6 and 7, the compartment 60 includes a fuel leakage detecting part 67 configured to be able to detect the fuel therein flowing out. The fuel leakage detecting part 67 is disposed in the fuel cell compartment 60c. In particular, the fuel leakage detecting part 67 can be disposed at an upper end and a rear end of the fuel cell compartment 60c.

Referring to Figures 1 to 3 and 5, the compartment 60 includes the ventilation hole 68 configured to allow the fuel therein flowing out to be discharged to the outside of the compartment 60. The ventilation hole 68 is configured to be openable and closable. The amount of opening and closing of the ventilation hole 68 is adjustable.

The ventilation hole 68 is also disposed in the fuel cell compartment 60c. In particular, the ventilation hole 68 can be disposed in the fuel cell-side housing part 61c of the housing 61. Furthermore, the ventilation hole 68 can be disposed at an upper end and a rear end on a lateral surface in the width direction of the fuel cell-side housing part 61c.

The ventilation hole 68 is normally in a closed state. The ventilation hole 68 is opened such that the fuel can be discharged to the outside of the compartment 60 when the fuel leakage detecting part 67 detects the fuel flowing out into the fuel cell compartment 60c.

### Details of Drain Mechanism

Referring to Figures 3 and 5 to 7, the drain mechanism 70 can be configured in detail as follows. As shown in Figures 3 and 5, the drain tank 71 is located on one side of the drive device 32 in the width direction. The drain tank 71 is located on one side of the motor 33 of the drive device 32 in the width direction. The motor control device 34 of the drive device 32 is located on the other side of the motor 33 of the drive device 32 in the width direction.

As shown in Figures 6 and 7, the fuel cell stack 41 of the fuel cell unit 40 is disposed in the upper portion of the fuel cell compartment 60c located closer to the upper side. As shown in Figure 7, the drain pipe 72 of the drain mechanism 70 extends downward from the fuel cell stack 41. The drain pipe 72 extends such that water generated in the fuel cell stack 41 can be sent from the fuel cell stack 41 to the drain tank 71 by gravity.

The drain pipe 72 includes an upstream end connected to a lower end of the fuel cell stack 41. The drain pipe 72 also includes a downstream end connected to an upper end of the drain tank 71. The drain pipe 72 can be configured as a flexible hose. The drain pipe 72 can be configured to be detachably attached to the drain tank 71.

The drain tank 71 can be configured to be detachably attached to the vehicle body 1. In this case, the water stored in the drain tank 71 can be drained in a state in which the drain tank 71 is removed from the vehicle body 1.

### Details of Electric Power Control Part

Referring to Figures 4 to 7, the electric power control part 80 can be configured in detail as follows. The secondary cell unit 81 and the electric power adjusting unit 82 are disposed outside the compartment 60 and above the compartment 60. Furthermore, the secondary cell unit 81 is disposed closer to the front side from the electric power adjusting unit 82.

The secondary cell unit 81 of the electric power control part 80 includes the drive cell 81a that is a secondary cell configured as a main power source. The drive cell 81a can also be referred to as a high voltage cell 81a. The secondary cell unit 81 includes the auxiliary cell 81b that is a secondary cell configured as an auxiliary power source. Typically, the auxiliary cell 81b can be configured as a 12 V (volt) cell.

The electric power adjusting unit 82 of the electric power control part 80 includes a drive electric power adjusting unit 82a configured to be able to adjust the electric power of the drive cell 81a. The electric power adjusting unit 82 includes an auxiliary electric power adjusting unit 82b configured to be able to adjust electric power of the auxiliary cell 81b. The drive electric power adjusting unit 82a can be configured as a DC/DC converter ("DC" being an abbreviation for "Direct Current") 82a for the drive cell 81a. The auxiliary electric power adjusting unit 82b can be configured as a DC/DC converter 82b for the auxiliary cell 81b.

The electric power control part 80 includes the secondary cell control device 83 configured to be able to control charging and discharging of the secondary cell unit 81. The secondary cell control device 83 is configured to be able to control the electric power adjusting unit 82 and the drive electric power and auxiliary electric power adjusting units 82a and 82b.

The electric power control part 80 includes the multi-control device 84 configured to be able to execute several types of control, for example, drive control of the vehicle and control of the fuel cell unit 40. The multi-control device 84 is configured to control the vehicle to drive in cooperation with the motor control device 34 and the secondary cell control device 83, based on an instruction from the operating device 12. The multi-control device 84 is configured to be able to control the fuel cell stack 41, the compressor 42, and the exhaust fan 43 of the fuel cell unit 40.

The multi-control device 84 can be configured to be able to control opening and closing of the Shut-off valves 52 in the plurality of fuel tanks 50. The multi-control device 84 is configured to be able to close the Shut-off valve 52 as necessary based on the detection of the fuel leakage detecting part 67.

The electric power control part 80 includes a cover 85 that defines the electric power control part 80 together with the upper end surface of the housing 61 of the compartment 60. The cover 85 is formed to surround the electric power control part 80 from above. The cover 85 is detachably attached to the upper end surface of the housing 61 of the compartment 60.

In a state in which the cover 85 is removed from the upper end surface of the housing 61, it is possible to easily replace the drive cell 81a and the auxiliary cell 81b of the secondary cell unit 81 opened to the outside of the vehicle. In the state in which the cover 85 is removed from the upper end surface of the housing 61, it is possible to easily perform maintenance on the drive cell 81a and the auxiliary cell 81b of the secondary cell unit 81 opened to the outside of the vehicle, the drive electric power adjusting unit 82a and the auxiliary electric power adjusting unit 82b of the electric power adjusting unit 82, the secondary cell control device 83, and the multi-control device 84.

The drive cell 81a is disposed in front of the auxiliary cell 81b. The drive cell 81a is adjacent to the auxiliary cell 81b in the front-rear direction. The drive electric power adjusting unit 82a and the auxiliary electric power adjusting unit 82b are disposed rearward of the auxiliary cell 81b. The drive electric power adjusting unit 82a and the auxiliary electric power adjusting unit 82b are spaced apart from each other in the front-rear direction with respect to the auxiliary cell 81b.

The secondary cell control device 83 is aligned with the secondary cell unit 81 in the width direction. In particular, the secondary cell control device 83 can be aligned with the drive cell 81a of the secondary cell unit 81 in the width direction. The multi-control device 84 is disposed rearward of the secondary cell control device 83. The multi-control device 84 is aligned with the electric power adjusting unit 82 in the width direction. In particular, the multi-control device 84 can be aligned with the drive electric power adjusting unit 82a and the auxiliary electric power adjusting unit 82b of the electric power adjusting unit 82 in the width direction.

### Function of Fuel Cell Vehicle

The fuel cell vehicle according to the invention can perform the following functions According to the invention, a case will be described in which hydrogen fuel is used for a fuel cell vehicle. In the fuel cell vehicle, the compartment 60 mounts a mechanism for supplying hydrogen fuel from the fuel tank 50 to the fuel cell unit 40 and a mechanism for generating power using the fuel cell unit 40.

The air inlet ducts 63 and 64 are disposed on left and right sides of the tank compartment 60b in the width direction of the compartment 60, respectively. The air inlet ducts 63 and 64 includes the air inlet ports 63a and 64a formed to be opened at the lower ends thereof, respectively. In the air inlet ducts 63 and 64, air goes upward from the air inlet ports 63a and 64a, and then enters the compartment 60 through the venting ports 63b and 64b. The fuel cell unit 40 generates power using the air which has entered the compartment 60 in this way. For this reason, the air inlet ducts 63 and 64 play a role of supplying air necessary for power generation of the fuel cell unit 40.

With respect to the shape of the air inlet ducts 63 and 64, the air inlet ducts 63 and 64 extend upward from the lower side. Therefore, even when foreign matter such as dust or dirt are mixed with the air during intake of air from the air inlet ports 63a and 64a formed at the lower ends of the air inlet ducts 63 and 64, the foreign matter can fall by the weight of the foreign matter before the foreign matter reaches the venting ports 63b and 64b. In the compartment 60, the air supplied to the fuel cell unit 40 is sent from the compressor 42 to the fuel cell stack 41 as air for reaction with hydrogen, and then the air is taken in from the front surface of the fuel cell stack 41 for the purpose of cooling the fuel cell stack 41 itself and further flows to be discharged from the exhaust port 62 by the exhaust fan 43 after the reaction or after cooling.

Normally, the inside of the compartment 60 is in a state of weak negative pressure when the fuel cell unit 40 is operated, whereas the inside of the compartment 60 is in a state of normal pressure when the fuel cell unit 40 is stopped. Such a compartment 60 mounts the pipe such as the fuel supply pipe 53 located around the fuel tank 50. When hydrogen leakage occurs from such a pipe during the operation of the fuel cell vehicle and exceeds the hydrogen concentration determined by the fuel leakage detecting part 67, the fuel cell vehicle functions to close the Shut-off valve 52 of the fuel tank 50 and to stop the operation of the fuel cell unit 40.

After the fuel cell unit 40 is stopped, the hydrogen in the compartment 60 is gathered higher, and can be naturally discharged from the ventilation hole 68 to the outside of the compartment 60. A ceiling surface of the compartment 60 may be preferably formed to be higher from the front side to the rear side, and the ventilation hole 68 may be located in the vicinity of a rear end of the ceiling surface of the compartment 60 which is highest. The fuel leakage detecting part 67 may be disposed in the compartment 60 at a place where hydrogen can be easily detected. One fuel leakage detecting part 67 or a plurality of fuel leakage detecting parts 67 may be disposed in the compartment 60. The fuel leakage detecting part 67 is also disposed near the ventilation hole 68 to effectively detect hydrogen.

As described above, the fuel cell vehicle according to the present embodiment includes: the operating part 10 including the front wheel 11 located closer to the front side and the operating device 12 used for the running operation; the riding part 20 configured to be able to allow the passenger P to ride in and located closer to the rear side from the operating part 10; the drive part 30 including the rear wheel 31 located closer to the rear side from the front wheel 11 and the motor 33 configured to be able to drive the rear wheel 31, and located closer to the rear side from the riding part 20; the fuel cell unit 40 configured to be able to generate the electric power used to drive the motor 33; and the fuel tank 50 configured to be able to store the fuel used for the electric power generation of the fuel cell unit 40, the fuel tank 50 including the container 51 for storing the fuel and the Shut-off valve 52 attached to the neck of the container 51 and configured to be able to open and close the flow of the fuel between the inside and the outside of the container 51, wherein the fuel cell vehicle includes the compartment 60 for mounting the fuel cell unit 40 and the fuel tank 50, the compartment 60 includes the tank compartment 60b located between the riding part 20 and the drive part 30 in the front-rear direction and the air inlet ducts 63 and 64 configured to be able to allow the air to flow into the compartment 60, the fuel tank 50 is disposed such that the Shut-off valve 52 is directed to one side in the width direction in the tank compartment 60b, the air inlet duct 63 is located closer to one side in the vehicle width direction from the Shut-off valve 52 and is overlapped on the Shut-off valve 52 as viewed in the width direction, and the compartment 60 includes the venting port 63b formed to vent (communicate) the air inlet duct 63 with the tank compartment 60b.

In such a fuel cell vehicle, even when an external force is applied to the lateral surface of the vehicle body 1 during a side collision of the vehicle, such an external force can be absorbed by the hollow air inlet duct 63 before being transferred to the fuel tank 50, particularly the Shut-off valve 52 of the fuel tank 50. Therefore, it is possible to efficiently protect the fuel tank 50, particularly the Shut-off valve 52 of the fuel tank 50.

For example, when the fuel such as hydrogen is supplied from the fuel tank 50 to the fuel cell unit 40, the container 51 of the fuel tank 50 is cooled by adiabatic expansion, and furthermore, the Shut-off valve 52 is also cooled by the cooling of the container 51. Since the air inlet duct 63 is disposed near the Shut-off valve 52 cooled in this way, the air flowing through the air inlet duct 63 can be efficiently cooled by the cooled Shut-off valve 52. Therefore, the fuel cell unit 40 can be efficiently cooled by the air sent to the fuel cell unit 40 through the air inlet duct 63. In other words, it is possible to improve cooling efficiency of the fuel cell unit 40.

In the fuel cell vehicle according to the present embodiment, the plurality of fuel tanks 50 are aligned in the up-down direction, the air inlet duct 63 extends from the lower side to the upper side along the Shut-off valves 52 of the plurality of fuel tanks 50 aligned in the up-down direction, the compartment 60 includes the fuel cell compartment 60c that mounts the fuel cell unit 40 and is located closer to the rear side from the tank compartment 60b and located above the drive part 30, the compartment 60 includes the exhaust port 62 configured to be able to discharge the gas existing therein to the outside of the compartment 60, and the exhaust port 62 is disposed at the rear end of the fuel cell compartment 60c of the compartment 60 located closer to the rear side from the drive part 30.

In such a fuel cell vehicle, the air flowing through the air inlet duct 63 can be efficiently cooled by the plurality of cooled Shut-off valves 52. Furthermore, the air inlet duct 63 is separated forward from the exhaust port 62 located at the rear end of the fuel cell compartment 60c of the compartment 60. Therefore, it is possible to prevent the air warmed in the compartment 60 from flowing to the air inlet duct 63 after being discharged from the exhaust port 62, and as a result, it is possible to prevent temperature increase of air flowing through the air inlet duct 63 due to such air. Accordingly, the fuel cell unit 40 can be efficiently cooled by the air sent to the fuel cell unit 40 through the air inlet duct 63. In other words, it is possible to improve cooling efficiency of the fuel cell unit 40. Eventually, since the air inlet ducts 63 and 64 extend from the lower side to the upper side, foreign matter such as dust or dirt, which have entered at the time of intake of air, can be smoothly shed by gravity.

In the fuel cell vehicle according to the present embodiment, the venting port 63b is disposed to correspond to the fuel tank 50 located at the lowermost side among the plurality of fuel tanks 50.

In such a fuel cell vehicle, since the air is located closer to the lower side as the temperature of the air becomes lower, such low-temperature air can be efficiently taken in from the venting port 63b into the tank compartment 60b of the compartment 60. In addition, since the air in the air inlet duct 63 can move from the lower side to the upper side to pass near the Shut-off valves 52 of all the fuel tanks 50, the air flowing through the air inlet duct 63 can be efficiently cooled by all the cooled Shut-off valves 52.

In the fuel cell vehicle according to the present embodiment, the plurality of venting ports 63b are disposed to face the Shut-off valves 52 of the plurality of fuel tanks 50, respectively. In such a fuel cell vehicle, the air sent from the air inlet duct 63 to the tank compartment 60b can be efficiently cooled by the plurality of Shut-off valves 52.

In the fuel cell vehicle according to the present embodiment, the fuel cell unit 40 includes the fuel cell stack 41 configured to be able to generate the electric power used to drive the motor 33 and the compressor 42 configured to be able to send compressed air to the fuel cell stack 41, the compressor 42 includes the air intake port 42a configured to take in the air into the compressor 42, the compartment 60 includes the connection port 65 that is opened to connect the tank compartment 60b and the fuel cell compartment 60c, the air intake port 42a is directed to the front side of the vehicle to face the connection port 65, and the upper end of the connection port 65 is located above the lower end of the air intake port 42a.

In such a fuel cell vehicle, after entering the tank compartment 60b, the air cooled while passing through the air inlet duct 63 is reliably sent to the air intake port 42a of the compressor 42 of the fuel cell compartment 60c through the connection port 65, and thus, it is possible to improve operating efficiency of the compressor 42. Furthermore, it is possible to improve cooling efficiency of the fuel cell unit 40.

In the fuel cell vehicle according to the present embodiment, the compartment 60 includes the frame assembly 66 including the two longitudinal frames 66a and 66b spaced apart from each other in the width direction and the plurality of lateral frames 66c disposed in the vehicle width direction, the plurality of lateral frames 66c are spaced apart from one another in the vehicle up-down direction and extend to connect the two longitudinal frames 66a and 66b, the fuel tank 50 is disposed inside the frame assembly 66, the longitudinal frame 66a on one side of the two longitudinal frames 66a and 66b is disposed on the side to which the Shut-off valve 52 is directed, and the longitudinal frame 66a on the one side is located between the Shut-off valve 52 and the air inlet duct 63 as viewed in the front-rear direction.

In such a fuel cell vehicle, the air inlet duct 63 can be disposed such that the air passing through the air inlet duct 63 can be efficiently cooled by the Shut-off valve 52 of the fuel tank 50 located inside the frame assembly 66.

The invention is defined by the appended claims.

### Reference Signs List

- 10: Operating part,
- 11: Front wheel,
- 12: Operating device
- 20: Riding part
- 30: Drive part,
- 31: Rear wheel,
- 33: Motor
- 40: Fuel cell unit,
- 41: Fuel cell stack,
- 42: Compressor,
- 42a: Air intake port
- 50: Fuel tank,
- 51: Container,
- 52: Shut-off valve
- 60: Compartment,
- 60b: Tank compartment,
- 60c: Fuel cell compartment,
- 62: Exhaust port,
- 63: Air inlet duct, first air inlet duct,
- 63b: Venting port,
- 65: Connection port,
- 66: Frame assembly,
- 66a: Longitudinal frame, First longitudinal frame,
- 66b: Longitudinal frame, Second longitudinal frame,
- 66c: Lateral frame, First lateral frame
- P: Passenger

## Claims

1. A fuel cell vehicle comprising:
an operating part (10) including a front wheel (11) located closer to a front side of the vehicle and an operating device (12) used for running operation;
a riding part (20) configured to be able to allow a passenger (P) to ride in and located closer to a rear side of the vehicle from the operating part (10);
a drive part (30) including a rear wheel (31) located closer to the rear side of the vehicle from the front wheel (11) and a motor (33) configured to be able to drive the rear wheel (31), and located closer to the rear side of the vehicle from the riding part (20);
a fuel cell unit (40) configured to be able to generate electric power used to drive the motor (33); and
a fuel tank (50) configured to be able to store fuel used for generation of the electric power in the fuel cell unit (40), the fuel tank (50) including a container (51) for storing the fuel and a Shut-off valve (52) attached to a neck of the container (51) and configured to be able to open and close a flow of the fuel between an inside and an outside of the container (51), wherein
the fuel cell vehicle includes a compartment (60) for mounting the fuel cell unit (40) and the fuel tank (50),
the compartment (60) includes a tank compartment (60b) located between the riding part (20) and the drive part (30) in a vehicle front-rear direction and an air inlet duct (63) configured to be able to allow air to flow into the compartment (60),
the fuel tank (50) is disposed such that the Shut-off valve (52) is directed to one side in a vehicle width direction in the tank compartment (60b),
the air inlet duct (63) is located closer to one side in the vehicle width direction from the Shut-off valve (52) and is overlapped on the Shut-off valve (52) as viewed in the vehicle width direction,
the compartment (60) includes a venting port (63b) formed to vent the air inlet duct (63) with the tank compartment (60b), and
the fuel cell unit (40) is adapted to generate power using air which has entered the compartment (60) through the venting port (63b).

2. The fuel cell vehicle according to claim 1, wherein
a plurality of the fuel tanks (50) are aligned in an up-down direction,
the air inlet duct (63) extends from a lower side to an upper side along the Shut-off valves (52) of the plurality of fuel tanks (50) aligned in the up-down direction,
the compartment (60) includes a fuel cell compartment (60c) that mounts the fuel cell unit (40) and is located closer to the rear side of the vehicle from the tank compartment (60b) and located above the drive part (30),
the compartment (60) includes an exhaust port (62) configured to be able to discharge gas existing therein to an outside of the compartment (60), and
the exhaust port (62) is disposed at a rear end of the fuel cell compartment (60c) of the compartment (60) located closer to the rear side of the vehicle from the drive part (30).

3. The fuel cell vehicle according to claim 2, wherein the venting port (63b) is disposed to correspond to the fuel tank (50) located at a lowermost side among the plurality of fuel tanks (50).

4. The fuel cell vehicle according to claim 2 or 3, wherein a plurality of the venting ports (63b) are disposed to face the Shut-off valves (52) of the plurality of fuel tanks (50), respectively.

5. The fuel cell vehicle according to any one of claims 2 to 4, wherein
the fuel cell unit (40) includes a fuel cell stack (41) configured to be able to generate the electric power used to drive the motor (33) and a compressor (42) configured to be able to send compressed air to the fuel cell stack (41),
the compressor (42) includes an air intake port (42a) configured to take in air into the compressor (42),
the compartment (60) includes a connection port (65) that is opened to connect the tank compartment (60b) and the fuel cell compartment (60c),
the air intake port (42a) is directed to the front side of the vehicle to face the connection port (65), and
an upper end of the connection port (65) is located above a lower end of the air intake port (42a).

6. The fuel cell vehicle according to any one of claims 1 to 5, wherein
the compartment (60) includes a frame assembly (66) including two longitudinal frames (66a, 66b) spaced apart from each other in the vehicle width direction and a plurality of lateral frames (66c) disposed in the vehicle width direction,
the plurality of lateral frames (66c) are spaced apart from one another in the vehicle up-down direction and extend to connect the two longitudinal frames (66a, 66b),
the fuel tank (50) is disposed inside the frame assembly (66),
the longitudinal frame (66a) on one side of the two longitudinal frames (66a, 66b) is disposed on the side to which the Shut-off valve (52) is directed, and
the longitudinal frame (66a) on the one side is located between the Shut-off valve (52) and the air inlet duct (63) as viewed in the vehicle front-rear direction.

## Patentansprüche

1. Brennstoffzellenfahrzeug, umfassend:
einen Bedienungsteil (10), der ein Vorderrad (11), das näher an einer Vorderseite des Fahrzeugs liegt, und eine Bedienungsvorrichtung (12) beinhaltet, die zum Fahrbetrieb verwendet wird;
einen Fahrteil (20), der so konfiguriert ist, dass er es einem Fahrgast (P) ermöglichen kann, in dem Fahrzeug zu fahren, und ausgehend von dem Bedienungsteil (10) näher an einer Hinterseite des Fahrzeugs liegt;
einen Antriebsteil (30), der ein Hinterrad (31), das von dem Vorderrad (11) ausgehend näher an der Hinterseite des Fahrzeugs angeordnet ist, und einen Motor (33) beinhaltet, der so konfiguriert ist, dass er das Hinterrad (31) antreiben kann, und der ausgehend von dem Fahrteil (20) näher an der Hinterseite des Fahrzeugs angeordnet ist;
eine Brennstoffzelleneinheit (40), die so konfiguriert ist, dass sie elektrische Energie erzeugen kann, die zum Antreiben des Motors (33) verwendet wird; und
einen Brennstofftank (50), der so konfiguriert ist, dass er Brennstoff speichern kann, der zur Erzeugung der elektrischen Energie in der Brennstoffzelleneinheit (40) verwendet wird, wobei der Brennstofftank (50) einen Behälter (51) zum Speichern des Brennstoffs und ein Absperrventil (52) beinhaltet, das an einem Hals des Behälters (51) angebracht ist und so konfiguriert ist, dass es einen Strom des Brennstoffs zwischen einem Inneren und einem Äußeren des Behälters (51) öffnen und schließen kann, wobei das Brennstoffzellenfahrzeug einen Raum (60) zum Anbringen der Brennstoffzelleneinheit (40) und des Brennstofftanks (50) beinhaltet,
der Raum (60) einen Tankraum (60b), der in einer Vorne-hinten-Richtung des Fahrzeugs zwischen dem Fahrteil (20) und dem Antriebsteil (30) liegt, und einen Lufteinlasskanal (63) beinhaltet, der so konfiguriert ist, dass er Luft in den Raum (60) strömen lassen kann,
der Brennstofftank (50) derart angeordnet ist, dass das Absperrventil (52) in einer Fahrzeugbreitenrichtung in dem Tankraum (60b) zu einer Seite gerichtet ist,
der Lufteinlasskanal (63) ausgehend von dem Absperrventil (52) in Fahrzeugbreitenrichtung näher an einer Seite liegt und bei Betrachtung in Fahrzeugbreitenrichtung das Absperrventil (52) überlappt,
der Raum (60) eine Entlüftungsöffnung (63b) beinhaltet, die ausgebildet ist, um den Lufteinlasskanal (63) mit dem Tankraum (60b) zu entlüften, und
die Brennstoffzelleneinheit (40) dazu eingerichtet ist, Energie unter Verwendung von Luft zu erzeugen, die durch die Entlüftungsöffnung (63b) in den Raum (60) gelangt ist.

2. Brennstoffzellenfahrzeug nach Anspruch 1, wobei eine Vielzahl der Brennstofftanks (50) in einer Oben-unten-Richtung ausgerichtet ist,
sich der Lufteinlasskanal (63) von einer Unterseite zu einer Oberseite entlang der Absperrventile (52) der Vielzahl von in Oben-unten-Richtung ausgerichteten Brennstofftanks (50) erstreckt,
der Raum (60) einen Brennstoffzellenraum (60c) beinhaltet, der die Brennstoffzelleneinheit (40) aufnimmt und ausgehend von dem Tankraum (60b) näher an der Hinterseite des Fahrzeugs liegt und über dem Antriebsteil (30) liegt,
der Raum (60) eine Auslassöffnung (62) beinhaltet, die so konfiguriert ist, dass sie darin vorhandenes Gas an eine Außenseite des Raums (60) abgeben kann, und
die Auslassöffnung (62) an einem hinteren Ende des Brennstoffzellenraums (60c) des Raums (60) liegt, das ausgehend von dem Antriebsteil (30) näher an der Hinterseite des Fahrzeugs liegt.

3. Brennstoffzellenfahrzeug nach Anspruch 2, wobei die Entlüftungsöffnung (63b) so angeordnet ist, dass sie mit demjenigen Brennstofftank (50) der Vielzahl von Brennstofftanks (50) übereinstimmt, der an einer untersten Seite liegt.

4. Brennstoffzellenfahrzeug nach Anspruch 2 oder 3, wobei eine Vielzahl der Entlüftungsöffnungen (63b) so angeordnet ist, dass sie jeweils den Absperrventilen (52) der Vielzahl von Brennstofftanks (50) gegenüberliegt.

5. Brennstoffzellenfahrzeug nach einem der Ansprüche 2 bis 4, wobei
die Brennstoffzelleneinheit (40) einen Brennstoffzellenstapel (41), der so konfiguriert ist, dass er die elektrische Energie erzeugen kann, die zum Antreiben des Motors (33) verwendet wird, und einen Kompressor (42) beinhaltet, der so konfiguriert ist, dass er Druckluft zu dem Brennstoffzellenstapel (41) leiten kann,
der Kompressor (42) eine Lufteinlassöffnung (42a) beinhaltet, die dazu konfiguriert ist, Luft in den Kompressor (42) einzusaugen,
der Raum (60) eine Verbindungsöffnung (65) beinhaltet, die geöffnet ist, um den Tankraum (60b) und den Brennstoffzellenraum (60c) zu verbinden,
die Lufteinlassöffnung (42a) zur Vorderseite des Fahrzeugs gerichtet ist, sodass sie der Verbindungsöffnung (65) gegenüberliegt, und
ein oberes Ende der Verbindungsöffnung (65) oberhalb eines unteren Endes der Lufteinlassöffnung (42a) liegt.

6. Brennstoffzellenfahrzeug nach einem der Ansprüche 1 bis 5, wobei
der Raum (60) eine Rahmenbaugruppe (66) beinhaltet, die zwei Längsrahmen (66a, 66b), die in der Fahrzeugbreitenrichtung voneinander beabstandet sind, und eine Vielzahl von seitlichen Rahmen (66c) beinhaltet, die in der Fahrzeugbreitenrichtung angeordnet ist,
die Vielzahl von seitlichen Rahmen (66c) in Oben-unten-Richtung des Fahrzeugs voneinander beabstandet ist und sich zum Verbinden der beiden Längsrahmen (66a, 66b) erstreckt,
der Brennstofftank (50) innerhalb der Rahmenbaugruppe (66) angeordnet ist,
der Längsrahmen (66a) der beiden Längsrahmen (66a, 66b) auf einer Seite auf derjenigen Seite angeordnet ist, auf die das Absperrventil (52) gerichtet ist, und
der Längsrahmen (66a) bei Betrachtung in Vorne-hinten-Richtung des Fahrzeugs auf der einen Seite zwischen dem Absperrventil (52) und dem Lufteinlasskanal (63) liegt.

## Revendications

1. Véhicule à pile à combustible comprenant :
une partie opérationnelle (10) comportant une roue avant (11) située plus près d'un côté avant du véhicule et un dispositif opérationnel (12) utilisé pour l'opération de fonctionnement ; une partie de conduite (20) configurée pour pouvoir permettre à un passager (P) de monter à bord et située plus près d'un côté arrière du véhicule par rapport à la partie opérationnelle (10) ;
une partie d'entraînement (30) comportant une roue arrière (31) située plus près du côté arrière du véhicule par rapport à la roue avant (11) et un moteur (33) configuré pour pouvoir entraîner la roue arrière (31), et situé plus près du côté arrière du véhicule par rapport à la partie de conduite (20) ; une unité de pile à combustible (40) configurée pour pouvoir générer de l'énergie électrique utilisée pour entraîner le moteur (33) ; et
un réservoir de carburant (50) configuré pour pouvoir stocker le carburant utilisé pour la génération d'énergie électrique dans l'unité de pile à combustible (40), le réservoir de carburant (50) comportant un conteneur (51) pour stocker le carburant et une vanne d'arrêt (52) fixée à un col du conteneur (51) et configurée pour pouvoir ouvrir et fermer un écoulement de carburant entre un intérieur et un extérieur du conteneur (51), dans lequel
le véhicule à pile à combustible comporte un compartiment (60) pour monter l'unité de pile à combustible (40) et le réservoir de carburant (50),
le compartiment (60) comporte un compartiment réservoir (60b) situé entre la partie de conduite (20) et la partie d'entraînement (30) dans une direction avant-arrière du véhicule et un conduit d'entrée d'air (63) configuré pour pouvoir permettre à l'air de s'écouler dans le compartiment (60),
le réservoir de carburant (50) est disposé de telle sorte que la vanne d'arrêt (52) est dirigée vers un côté dans le sens de la largeur du véhicule dans le compartiment réservoir (60b),
le conduit d'entrée d'air (63) est situé plus près d'un côté dans le sens de la largeur du véhicule à partir de la vanne d'arrêt (52) et chevauche la vanne d'arrêt (52) vu dans le sens de la largeur du véhicule,
le compartiment (60) comporte un orifice de ventilation (63b) formé pour ventiler le conduit d'entrée d'air (63) avec le compartiment réservoir (60b), et
l'unité de pile à combustible (40) est adaptée pour générer de l'énergie en utilisant l'air qui est entré dans le compartiment (60) par l'orifice de ventilation (63b).

2. Véhicule à pile à combustible selon la revendication 1, dans lequel
une pluralité de réservoirs de carburant (50) sont alignés dans une direction haut-bas,
le conduit d'entrée d'air (63) se prolonge d'un côté inférieur vers un côté supérieur le long des vannes d'arrêt (52) de la pluralité de réservoirs de carburant (50) alignés dans la direction haut-bas,
le compartiment (60) comporte un compartiment pile à combustible (60c) qui supporte l'unité de pile à combustible (40) et est situé plus près du côté arrière du véhicule par rapport au compartiment réservoir (60b) et situé au-dessus de la partie d'entraînement (30),
le compartiment (60) comporte un orifice d'échappement (62) configuré pour pouvoir évacuer le gaz existant à l'intérieur vers l'extérieur du compartiment (60), et
l'orifice d'échappement (62) est disposé à une extrémité arrière du compartiment pile à combustible (60c) du compartiment (60) situé plus près du côté arrière du véhicule par rapport à la partie d'entraînement (30).

3. Véhicule à pile à combustible selon la revendication 2, dans lequel l'orifice de ventilation (63b) est disposé pour correspondre au réservoir de carburant (50) situé sur un côté le plus bas parmi la pluralité de réservoirs de carburant (50) .

4. Véhicule à pile à combustible selon la revendication 2 ou 3, dans lequel une pluralité d'orifices de ventilation (63b) sont disposés pour faire face aux vannes d'arrêt (52) de la pluralité de réservoirs de carburant (50), respectivement.

5. Véhicule à pile à combustible selon l'une quelconque des revendications 2 à 4, dans lequel
l'unité de pile à combustible (40) comporte un empilement de piles à combustible (41) configuré pour pouvoir générer l'énergie électrique utilisée pour entraîner le moteur (33) et un compresseur (42) configuré pour pouvoir envoyer de l'air comprimé à l'empilement de piles à combustible (41),
le compresseur (42) comporte un orifice d'admission d'air (42a) configuré pour aspirer de l'air dans le compresseur (42),
le compartiment (60) comporte un port de connexion (65) qui est ouvert pour connecter le compartiment réservoir (60b) et le compartiment pile à combustible (60c),
l'orifice d'admission d'air (42a) est dirigé vers le côté avant du véhicule pour faire face à l'orifice de connexion (65), et
une extrémité supérieure de l'orifice de connexion (65) est située au-dessus d'une extrémité inférieure de l'orifice d'admission d'air (42a).

6. Véhicule à pile à combustible selon l'une quelconque des revendications 1 à 5, dans lequel
le compartiment (60) comporte un ensemble cadre (66) comportant deux cadres longitudinaux (66a, 66b) espacés l'un de l'autre dans la direction de la largeur du véhicule et une pluralité de cadres latéraux (66c) disposés dans la direction de la largeur du véhicule,
la pluralité de cadres latéraux (66c) sont espacés les uns des autres dans la direction haut-bas du véhicule et se prolongent pour relier les deux cadres longitudinaux (66a, 66b),
le réservoir de carburant (50) est disposé à l'intérieur de l'ensemble cadre (66),
le cadre longitudinal (66a) d'un côté des deux cadres longitudinaux (66a, 66b) est disposé du côté vers lequel la vanne d'arrêt (52) est dirigée, et
le cadre longitudinal (66a) du côté est situé entre la vanne d'arrêt (52) et le conduit d'entrée d'air (63), vu dans la direction avant-arrière du véhicule.
